# EUROPÄISCHE PATENTSCHRIFT

(11) **EP 2 475 538 B1**
(45) Veröffentlichungstag und Bekanntmachung des Hinweises auf die Patenterteilung: **06.11.2013**
(21) Anmeldenummer: 10760245.0
(22) Anmeldetag: 06.09.2010
(51) Int. Cl.: B60J 5/04

(54) **FAHRZEUGTÜRANORDNUNG UND VERFAHREN ZUR MONTAGE**
VEHICLE DOOR ARRANGEMENT AND METHOD FOR THE ASSEMBLY THEREOF
ENSEMBLE PORTIÈRE D'AUTOMOBILE ET PROCÉDÉ DE MONTAGE

(30) Priorität: 09.09.2009 DE 102009040636
(43) Veröffentlichungstag der Anmeldung: 18.07.2012
(73) Patentinhaber: Johnson Controls Interiors GmbH & Co. KG, 47929 Grefrath (DE)
(72) Erfinder: SCHIDAN, Alexander, 42719 Solingen (DE); MIEGLITZ, Hans-Helmut, 40789 Monheim (DE)
(74) Vertreter: Schwöbel, Thilo K.
(86) Internationale Anmeldenummer: PCT/EP2010/005451
(87) Internationale Veröffentlichungsnummer: WO 2011/029563

(56) Entgegenhaltungen:
- DE-A1- 2 237 245
- DE-A1- 10 215 904
- DE-A1- 10 241 046
- DE-C1- 3 935 857
- DE-C1- 19 810 643

## Beschreibung

Die vorliegende Erfindung betrifft eine Fahrzeugtüranordnung mit einem ersten Verkleidungsteil, einem Strukturelement und einem zweiten Verkleidungsteil. Eine solche Fahrzeugtüranordnung ist aus DE 10215904 bekannt. Beispielsweise offenbart die deutsche Offenlegungsschrift DE 10 2007 061 209 A1 eine Seitentür für einen Kraftwagen mit einer Außenbeplankung. Eine solche Außenbeplankung dient der ästhetisch vorteilhaften Abdeckung einer solchen Seitentür eines Fahrzeugs. Eine gewichtsmäßig besonders leichte Fahrzeugtüranordnung ist mit einer solchen Technologie nicht oder nur mit erheblichem Aufwand darstellbar.

Es war deshalb die Aufgabe der vorliegenden Erfindung, eine Fahrzeugtür zur Verfügung zu stellen, die die Nachteile des Standes der Technik nicht oder nur in eingeschränktem Umfang aufweist.

Gelöst wird die Aufgabe mit einer Fahrzeugtüranordnung mit einem ersten Verkleidungsteil, einem Strukturelement und einem zweiten Verkleidungsteil, wobei mittels eines Dichtungselements eine Verbindung zwischen dem ersten Verkleidungsteil und dem zweiten Verkleidungsteil vorgesehen ist, wobei das erste Verkleidungsteil ein längs des Dichtungselements sich erstreckendes und mit dem Dichtungselement zusammenwirkendes Anbindungselement aufweist. Hierdurch ist es erfindungsgemäß in vorteilhafter Weise möglich, dass ein erheblich geringeres Bauteilgewicht der Fahrzeugtüranordnung, insbesondere dadurch erzielt werden kann, dass als Strukturelement beispielsweise ein Rahmenprofil verwendet werden kann, etwa ein Aluminiumrahmenprofil, wofür diverse Beplankungsmaterialien zur ästhetisch vorteilhaften Realisierung der Außenhaut des Fahrzeugs bzw. der Fahrzeugtürariordnung möglich sind. Als mögliche Strukturelemente kommen hierbei insbesondere Stranggussprofile als Trägerskelett der Fahrzeugtüranordnung in Frage. Als Außenverkleidung kommen hierbei insbesondere Beplankungsmaterialien in Form von Kunststoffelementen, Aluminiumelementen, Glasfaserelementen und/oder Kohlefaserelementen in Frage. Hierdurch lassen sich erhebliche Gewichtreduzierungen insbesondere dadurch erzielen, dass die Möglichkeit besteht gänzlich unterschiedliche Formgebungen als beispielsweise im Gesenk geformte, konventionelle Stahlblechtüren zu verwenden.

Die erfindungsgemäße Fahrzeugtüranordnung weist eine integrierte Befestigung zwischen dem ersten Verkleidungsteil und dem zweiten Verkleidungsteil auf, wobei ein mit dem Dichtungselement zusammenwirkendes Anbindungselement des ersten Verkleidungsteils zusammen mit dem Dichtungselement die Verbindungsfunktion zumindest teilweise übernimmt.

Gemäß einer besonders bevorzugten Ausführungsform der vorliegende Erfindung ist es vorgesehen, dass das Dichtungselement im Wesentlichen vollständig umlaufend vorgesehen ist. Hierunter wird erfindungsgemäß verstanden, dass das Dichtungselement in einem wesentlichen Flächenbereich der Fahrzeugtüranordnung umlaufend vorgesehen ist. Besonders bevorzugt ist, das Dichtungselement umlaufend geschlossen ausgebildet, es kann jedoch auch vorgesehen sein, dass beispielsweise zwei überlappende Enden des Dichtungselements vorgesehen sind oder aber dass die beiden Enden nicht miteinander verbunden sind und daher der Umlauf des Dichtungselements nur teilweise realisiert ist. Erfindungsgemäß ist es durch das im Wesentlichen vollständig umlaufend vorgesehene Dichtungselement in besonders vorteilhafter Weise möglich, eine gute Verbindung zwischen dem ersten Verkleidungsteil und dem zweiten Verkleidungsteil zu realisieren und gleichzeitig eine hervorragende Toleranzausgleichswirkung der verschiedenen Komponenten der Fahrzeugtüranordnung zu erzielen.

Erfindungsgemäß ist es weiterhin besonders bevorzugt, dass das Dichtungselement eine Einfühmut aufweist, wobei ein Anbindungsbereich des Anbindungselements in die Einfühmut eingreifend vorgesehen ist. Beispielsweise ist der Anbindungsbereich als im Wesentlichen flacher Bereich vorgesehen, welcher zwei einander gegenüberliegende Flächen aufweist, welche an der Einfühmut des Dichtungselements im Montagezustand anliegen. Hierdurch kann eine besonders gute Verbindung zwischen dem ersten Verkleidungsteil und dem zweiten Verkleidungsteil der erfindungsgemäßen Fahrzeugtüranordnung realisiert werden. Bei dieser Ausführung ist es insbesondere vorteilhaft möglich, dass weitere Verbindungselemente (beispielsweise Clipse bzw. Verklipsungen) zwischen dem ersten Verkleidungsteil und dem zweiten Verkleidungsteil hinsichtlich ihrer Anzahl reduziert werden können oder aber gänzlich darauf verzichtet werden kann.

Gemäß einer alternativen Ausführungsform der Fahrzeugtüranordnung ist es ferner auch bevorzugt vorgesehen, dass das Dichtungselement ein Klemmelement aufweist, wobei eine Anbindungsfläche des Anbindungselements an dem Klemmelement einseitig anliegend vorgesehen ist. Hierdurch ist es erfindungsgemäß in vorteilhafter Weise möglich, dass ein guter Toleranzausgleich bei der Montage des ersten und zweiten Verkleidungsteils möglich ist. Ferner wird auch die Montage des ersten und zweiten Verkleidungsteils miteinander vereinfacht.

Gemäß sämtlicher Ausführungsformen der vorliegenden Erfindung kann es erfindungsgemäß vorgesehen sein, dass das Dichtungselement ein Verstärkungselement umschließt. Das Umschließen des Verstärkungselementes kann erfindungsgemäß entweder entlang der gesamten Länge des Dichtungselementes derart vorgesehen sein, dass entlang der Länge des Dichtungselements in einem Querschnitt das Dichtungselement das Verstärkungselement vollständig umchließt. Alternativ hierzu kann es jedoch erfindungsgemäß auch vorgesehen sein, dass das Verstärkungselement lediglich auf Teilbereichen entlang der Länge des Dichtungselements vorgesehen ist.

Erfindungsgemäß ist es weiterhin auch bevorzugt vorgesehen, dass das zweite Verkleidungsteil ein längs des Dichtungselements sich erstreckendes und mit dem Dichtungselement zusammenwirkendes weiteres Anbindungselement aufweist. Hierdurch kann in besonders einfacher Weise eine sehr solide Verbindung zwischen dem ersten und zweiten Verkleidungsteil der Fahrzeugtüranordnung hergestellt werden. Bei dieser zuletzt genannten Ausführungsform mit einem weiteren Anbindungselement ist es bevorzugt weiterhin vorgesehen, dass das weitere Anbindungselement einen weiteren Anbindungsbereich aufweist, wobei der weitere Anbindungsbereich beidseitig einer weiteren Einfühmut des Dichtungselements mit dem Dichtungselement verbunden ist. Hierdurch ist es erfindungsgemäß in vorteilhafter Weise möglich, dass zwischen dem ersten Verkleidungsteil und dem zweiten Verkleidungsteil über das Dichtungselement eine besonders stabile Verbindung möglich ist.

Erfindungsgemäß ist ferner auch bevorzugt, dass entlang des Dichtungselements der weitere Anbindungsbereich des weiteren Anbindungselements einerseits und der Anbindungsbereich oder die Anbindungsfläche des Anbindungselements im wesentlichen parallel zueinander entsprechend einer Montagerichtung verlaufend vorgesehen sind. Hierdurch ergibt sich die Möglichkeit einer besonders einfachen und dennoch stabilen und leichtbautechnisch besonders vorteilhaften Verbindung des ersten und zweiten Verkleidungsteils.

Ein weiterer Gegenstand der vorliegenden Erfindung betrifft ein Verfahren zur Montage einer Fahrzeugtüranordnung mit einem ersten Verkleidungsteil, einem Strukturelement und einem zweiten Verkleidungsteil, wobei mittels eines Dichtungselements eine Verbindung zwischen dem ersten Verkleidungsteil und dem zweiten Verkleidungsteil hergestellt wird, wobei ein längs des Dichtungselements sich erstreckendes und mit dem Dichtungselement zusammenwirkendes Anbindungselement des ersten Verkleidungsteils entweder in eine Einfühmut des Dichtungselements eingeführt wird oder an ein Klemmelement des Dichtungselements angelegt wird. Hierdurch ist es erfindungsgemäß möglich, nicht nur eine extreme Leichtbauanordnung der Fahrzeugtüranordnung zu ermöglichen, sondern auch eine einfache und kostengünstige Montage der Fahrzeugtüranordnung zu realisieren.

Im Folgenden wird die Erfindung anhand der nachfolgenden Figuren erläutert. Diese Erläuterungen sind lediglich beispielhaft und schränken den allgemeinen Erfindungsgedanken nicht ein.
- **Figur 1**: zeigt eine Fahrzeugtüranordnung gemäß der vorliegenden Erfindung.
- **Figur 2**: zeigt eine Fahrzeugtüranordnung gemäß der vorliegende Erfindung in einer weiteren Ausführungsform.
- **Figur 3**: zeigt in einer Querschnittdarstellung einen Teil des Verbindungsbereichs eines ersten und zweiten Verkleidungsteils einer erfindungsgemäßen Fahrzeugtüranordnung in unmontiertem Zustand.
- **Figur 4**: zeigt in einer Querschnittdarstellung einen Teil des ersten und zweiten Verkleidungsteils der erfindungsgemäßen Fahrzeugtüranordnung in montiertem Zustand.
- **Figuren 5 bis 7**: zeigen Detaildarstellungen der Anbindung der Verkleidungsteile gemäß dreier Schnittdarstellungen.

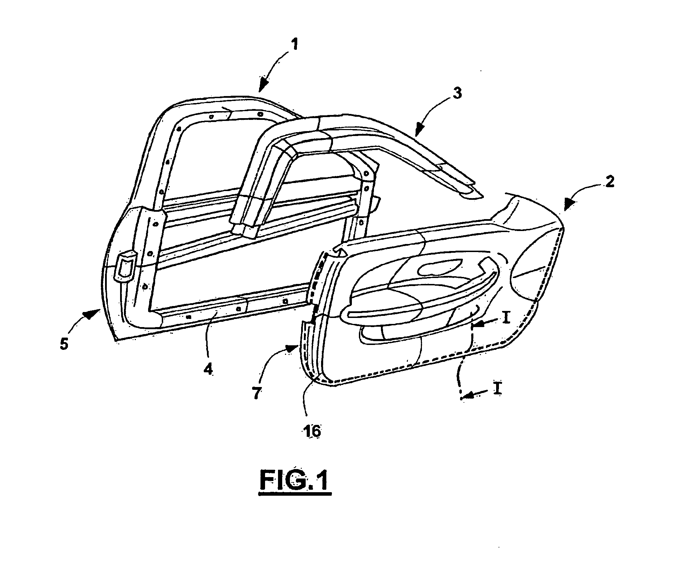

In Figur 1 ist schematisch eine Explosionszeichnung einer Fahrzeugtür in perspektivischen Darstellung abgebildet. Hierbei weist die Fahrzeugtür bzw. die Fahrzeugtüranordnung ein erstes Verkleidungsteil 1 auf, welches im dargestellten Beispiel einer Außenverkleidung der Fahrzeugtüranordnung entspricht. Ferner weist die Fahrzeugtüranordnung ein zweites Verkleidungsteil 2 und eine Fensterrahmenabdeckung 3 auf. Im Folgenden wird das zweite Verkleidungsteil 2 und die Fensterrahmenabdeckung 3 gemeinsam als zweites Verkleidungsteil 2, 3 bezeichnet. In der beispielhaft dargestellten Abbildung entspricht das zweite Verkleidungsteil 2, 3 einer Innenverkleidung der Fahrzeugtüranordnung. Die Fahrzeugtüranordnung weist ferner ein Strukturelement 4 auf, welches insbesondere in Form einer Rahmenanordnung etwa aus Stranggussprofilen oder dergleichen realisiert ist.

Ein Dichtungselement 7 ist in Form insbesondere eines Verkleidungskeders entlang einer gestrichelt eingezeichneten Linie vorgesehen, die den Verlauf 16 des Verkleidungskeders bzw. des Dichtungselements 7 angibt.

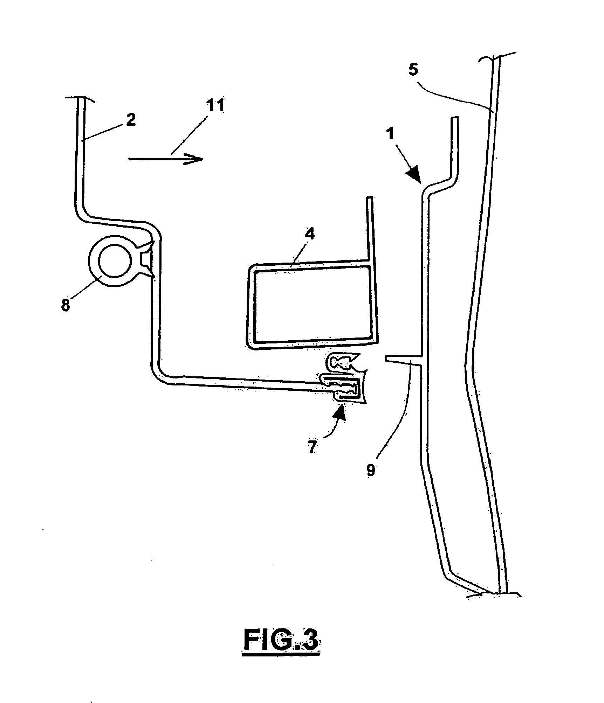

Im unteren Bereich der Darstellung gemäß Figur 1 ist schematisch eine Schnittlinie I-I dargestellt, gemäß der die Schnittdarstellungen gemäß der Figuren 3 bis 7 zu denken sind.

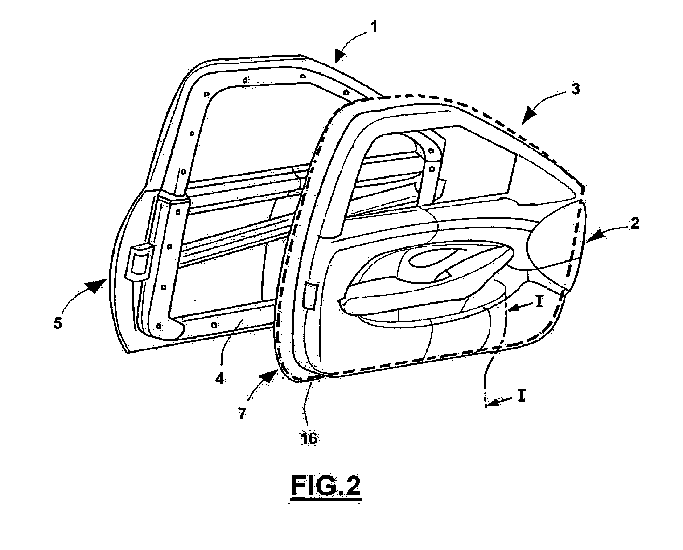

In Figur 2 ist eine Explosionsdarstellung einer weiteren erfindungsgemäßen Fahrzeugtüranordnung gemäß einer weiteren Ausführungsform dargestellt. Alternativ zu der gemäß Figur 1 möglichen ersten Ausführungsform trägt die Ausführungsform gemäß der Figur 2 ein integriertes zweites Verkleidungsteil 2, 3, bei dem die Fensterrahmenabdeckung 3 bzw. der Bereich des zweiten Verkleidungsteils, der die Fensterrahmenabdeckung übernimmt, mit dem restlichen Teil des zweites Verkleidungsteils 2, 3, integriert ist. Wiederum weist die Fahrzeugtüranordnung das Strukturelement 4 auf. Weiterhin ist wiederum das Dichtungselement 7 mittels einer gestrichelten Linie 16, die den Verlauf des Verkleidungsteils angibt, dargestellt.

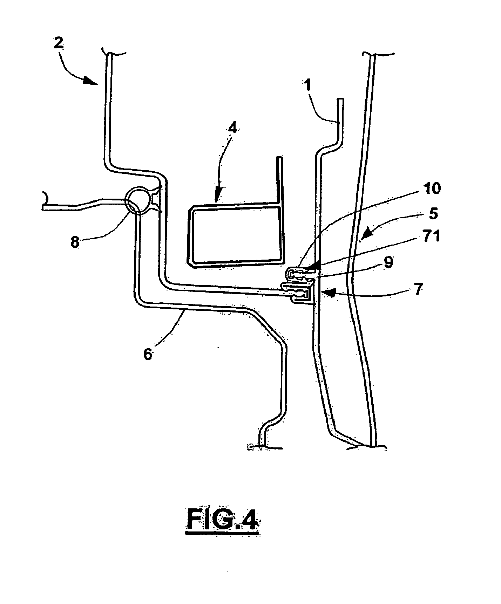

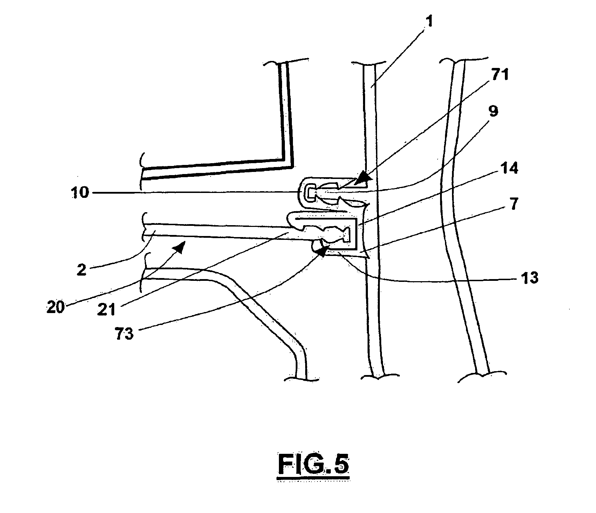

Die Figuren 3 bis 7 entsprechen jeweils einer Schnittdarstellung senkrecht zum Verlauf des Dichtungselements 7, etwa gemäß den Schnittlinien I-I gemäß der Figuren 1 und 2. In Figur 3 ist hierbei das erste Verkleidungsteil 1 und das zweite Verkleidungsteil 2 in unmontiertem Zustand dargestellt. Der montierte Zustand, wie er gemäß der Figur 4 dargestellt ist, ergibt sich aus dem unmontierten Zustand gemäß der Figur 3 durch eine Relativbewegung des ersten Verkleidungsteils 1 und des zweiten Verkleidungsteils 2 entlang einer Montagerichtung 11, die lediglich in der Figur 3 abgebildet ist. Erkennbar weist das erste Verkleidungsteil 1 eine Beplankung 5 auf, die beispielsweise der ästhetisch ansprechenden Formgebung der Fahrzeugtüranordnung entspricht. Zur Verbindung des ersten und zweiten Verkleidungsteils 1, 2 ist erfindungsgemäß wenigstens ein Anbindungselement 9 am ersten Verkleidungsteil 1 vorgesehen. Das Anbindungselement 9 wird zu Montagezwecken mit dem Dichtungselement 7 verbunden. Schematisch ist in Figur 4 weiterhin auch ein fahrzeugseitiges Element 6 dargestellt, bei dem es sich beispielsweise um den karosserieseitigen Schwellerbereich des Fahrzeugs handelt. Zur Abdichtung des Fahrzeugsinnenraums (in der Darstellung gemäß der Figur 4 auf der linken Seite des zweiten Verkleidungsteils 2) ist erfindungsgemäß eine weitere Dichtung 8, etwa eine Türdichtung 8 vorgesehen. Das Dichtungselement 7 gemäß der Darstellung in der Figur 4 und der Figur 5 weist zur Aufnahme des Anbindungselements 9 des ersten Verkleidungsteils 1 eine Einfühmut 71 auf, welche beispielhaft ein sogenanntes Klemmprofil 10 aufweist.

Die Figuren 5 bis 7 zeigen verschiedene Ausführungsformen der Gestaltung des Dichtungselements 7 gemäß verschiedener Varianten der vorliegenden Erfindung. In allen im Zusammenhang mit den Figuren dargestellten Ausführungsbeispielen dient das erste Verkleidungsteil 1 der Außenverkleidung der Fahrzeugtüranordnung und das Verkleidungsteil 2, 3 dient der Innenverkleidung der Fahrzeugtüranordnung. Erfindungsgemäß kann jedoch durchaus eine Vertauschung der Rollen von erstem und zweitem Verkleidungsteil vorgesehen sein.
Gemäß einer Ausführungsvariante des Dichtungselements 7 gemäß der vorliegenden Erfindung weist das erste Verkleidungsteil 1 das Anbindungselement 9 auf und es weist das zweite Verkleidungsteil 2 ein längs des Dichtungselements 7 sich erstreckendes und mit dem Dichtungselement 7 zusammenwirkendes zweites Anbindungselement 20 auf. Das weitere Anbindungselement 20 weit einen weiteren Anbindungsbereich 21 auf, der beidseitig einer weiteren Einfühmut 73 des Dichtungselements 7 verbunden ist. Die weitere Einfühmut 73 ist im in der Figur 5 dargestellten Ausführungsbeispiel insbesondere als sogenanntes Abdeckprofil 13 ausgebildet und vermag einen guten Halt bzw. eine gute Verbindung zwischen dem zweiten Verkleidungsteil 2, 3 (bzw. dem Anbindungsbereich 21) und dem Dichtungselement 7 bereitzustellen. Zur weiteren Verbesserung der Verbindung zwischen dem zweiten Verkleidungsteil 2, 3 und dem Dichtungselement 7 kann es gemäß einer besonders bevorzugten und in der Figur 5 dargestellten Ausführungsform vorgesehen sein, dass ein Verstärkungselement 14, beispielsweise in Form einer Metallseele 14, im Dichtungselement 7 verlaufend vorgesehen ist, das die Klemmwirkung im Bereich des weiteren Anbindungselements 20 verstärkt bzw. verbessert. Gemäß der in Figur 5 dargestellten Ausführungsvariante wird das Anbindungselement 9 in die Einführnut 71 des Dichtungselements 7 eingeführt, womit eine solide Verbindung zwischen dem ersten und zweiten Verkleidungsteils 2, 3 realisierbar ist. Die Einfühmut 71 ist in der in Figur 5 dargestellten Ausführungsvariante insbesondere als ein Klemmprofil 10 ausgebildet, das heißt die Einfühmut 71 weist wieder hakenförmige Strukturierungen auf, die eine Lösung des ersten vom zweiten Verkleidungsteil 1, 2, 3 erschwert bzw. bzw. die Haltekräfte erhöht.

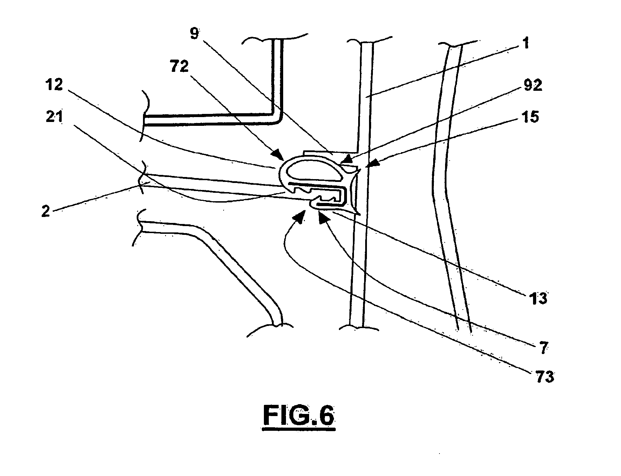

In Figur 6 ist eine weitere Ausführungsvariante des Dichtungselements 7 gemäß der vorliegenden Erfindung dargestellt. Wiederum ist die Anbindung des Dichtungselements 7 zum zweiten Verkleidungsteil 2, 3 in Form eines Abdeckprofils 13 bzw. in Form der weiteren Einführnut 73 ausgebildet. In Bezug auf das Anbindungselement 9 ergibt sich jedoch bei der weiteren Ausführungsvariante gemäß der Figur 6 ein Unterschied dahingehend, dass das Dichtungselement 7 keine Einführnut für das Anbindungselement 9, sondern ein Druckprofil 12 aufweist, welches im Rahmen der vorliegenden Erfindung auch als ein Klemmelement 72 bezeichnet wird. Hierbei ist es so, dass das Klemmelement 72 im Wesentlichen ausschließlich an einer Anbindungsfläche 92 einseitig des Anbindungselements 9 angeordnet ist, so dass das Dichtungselement 7 mittels des Klemmelements 72 einen das erste Verkleidungsteils 1 relativ zum zweiten Verkleidungsteils 2, 3 arretierenden Klemmdruck auf das Anbindungselement 9 ausübt. Insbesondere für den Fall einer vollständig umlaufend vorgesehenen Ausführung des Dichtungselements 7 ist es bei der Ausführungsvariante gemäß der Figur 6 erfindungsgemäß in vorteilhafter Weise möglich, dass in einfacher Weise eine präzise Positionierung der Verkleidungsteile 1, 2, 3 relativ zueinander möglich ist.

Gemäß der Ausführungsvariante nach Figur 6 kann das Dichtungselement 7 insbesondere eine Dichtlippe 15 bzw. eine Mehrzahl von Dichtlippen 15 aufweisen, damit der vom ersten und zweiten Verkleidungsteil 1, 2, 3 umschlossene Hohlraum der Fahrzeugtüranordnung in geeigneter Weise abgedichtet ist oder zumindest vor Spritzwasser, Zugluft oder dergleichen geschützt ist.

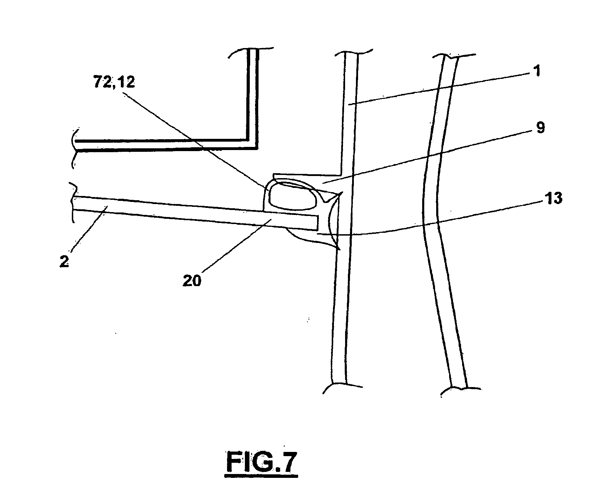

Bei der Ausführungsvariante gemäß der Figur 7 ist wiederum in Bezug auf das Anbindungselement 9 am Dichtungselement 7 ein Klemmelement 72 bzw. ein Druckprofil 12 vorgesehen, wobei jedoch das Dichtungselement 7 nicht auf das weitere Anbindungselement 20 aufgesteckt ist (d. h. vorgefertigt und anschließend aufgesteckt wird), sondern die Formgebung des Dichtungselements 7 gemeinsam mit der Verbindung mit dem zweiten Verkleidungsteil 2 bewerkstelligt wird, so dass eine besonders feste Verbindung zwischen dem Dichtungselement 7 und dem zweiten Verkleidungsteil 2, 3 realisierbar ist. Die Verbindung zwischen dem weiteren Anbindungselement 20 des zweiten Verkleidungsteils 2, 3 und dem Dichtungselement 7 kann bei der in Figur 7 gezeigten Ausführungsvariante beispielsweise mittels Roboter-Extrusion vorgesehen sein, wobei eine automatische Aufbringung des Dichtungselements 7 eine gesicherte Haftung des Dichtungselements 7 bzw. Keders bei einer entsprechenden Materialpaarung zwischen dem Material des weiteren Anbindungselements bzw. des weiteren Anbindungsbereichs 71 einerseits und dem Material des Dichtungselements 7 anderseits ermöglicht, was beispielsweise durch eine Vernetzung zwischen diesen Materialien in vorteilhafter Weise möglich ist.

Die Ausführungsvariante, bei der das Dichtungselement 7 ein Klemmelement 72 aufweist, hat den Vorteil, dass bei Verwendung beispielsweise eines Hohlprofils als Druckprofil 12 bzw. als Klemmelement 72 die möglichen Toleranzen zwischen dem ersten und zweiten Verkleidungsteil entlang des Dichtungselements 7 umlaufend ausgeglichen werden, so dass die Verkleidungskante beispielsweise umlaufend eingefasst ist und somit Toleranzen optisch ausgewogen abgedeckt werden und sich ein fugenfreier, sauberer Endsitz im ersten und im zweiten Verkleidungsteil 1, 2, 3 ermöglicht. Insbesondere bei dieser Ausführungsvariante der vorliegenden Erfindung ist es durchaus zusätzlich zu einer solchen Verbindung zwischen dem ersten und zweiten Verkleidungsteil 1, 2, 3 noch vorgesehen, dass beispielsweise mittels Klippsverbindungselementen (nicht dargestellt) eine zusätzliche mechanische Verbindung zwischen den Verkleidungsteilen 1, 2, 3 realisiert wird.

### Bezugszeichenliste

- 1: erstes Verkleidungsteils / Türkarosserie
- 2: zweites Verkleidungsteil / Türinnenverkleidung
- 3: Fensterrahmenabdeckung
- 4: Strukturelement / Karosserie-Profilaufbau
- 5: Türaußenbeplankung
- 6: Schweller
- 7: Dichtungselement / Verkleidungskeder
- 8: Primär-Türdichtung
- 9: Anbindungselement / umlaufende Positionierrippe
- 10: Klemmprofil
- 11: Montagerichtung
- 12: Druckprofil
- 13: Abdeckprofil
- 14: Verstärkungselement / Metallseele
- 15: Dichtlippe
- 16: Verlauf des Dichtungselements / Verkleidungskeders
- 20: weiteres Anbindungselement
- 21: weiterer Anbindungsbereich
- 71: Einfühmut
- 72: Klemmelement
- 73: weitere Einfühmut
- 91: Anbindungsbereich
- 92: Anbindungsfläche

## Patentansprüche

1. Fahrzeugtüranordnung mit einem Verkleidungsteil (1), einem Strukturelement (4) und einem zweiten Verkleidungsteil (2, 3), **dadurch gekennzeichnet, dass** mittels eines Dichtungselements (7) eine Verbindung zwischen dem ersten Verkleidungsteil (1) und dem zweiten Verkleidungsteil (2,3) vorgesehen ist, wobei das erste Verkleidungsteil (1) ein längs des Dichtungselements (7) sich erstreckendes und mit dem Dichtungselement (7) zusammenwirkendes Anbindungselement (9) aufweist.

2. Fahrzeugtüranordnung nach Anspruch 1, **dadurch gekennzeichnet, dass** das Dichtungselement (7) im Wesentlichen vollständig umlaufend vorgesehen ist.

3. Fahrzeugtüranordnung nach Anspruch 1 oder 2, **dadurch gekennzeichnet, dass** das Dichtungselement (7) eine Einfühmut (71) aufweist, wobei ein Anbindungsbereich (91) des Anbindungselements (9) in die Einfühmut (71) eingreifend vorgesehen ist.

4. Fahrzeugtüranordnung nach Anspruch 1 oder 2, **dadurch gekennzeichnet, dass** das Dichtungselement (7) ein Klemmelement (72) aufweist, wobei eine Anbindungsfläche (92) des Anbindungselements (9) an dem Klemmelement (72) einseitig anliegend vorgesehen ist.

5. Fahrzeugtüranordnung nach einem der vorhergehenden Ansprüche, **dadurch gekennzeichnet, dass** das Dichtungselement (7) ein Verstärkungselement (14) umschließt.

6. Fahrzeugtüranordnung nach einem der vorhergehenden Ansprüche, **dadurch gekennzeichnet, dass** das zweite Verkleidungsteil (2, 3) ein längs des Dichtungselements (7) sich erstreckendes und mit dem Dichtungselement (7) zusammenwirkendes weiteres Anbindungselement (20) aufweist.

7. Fahrzeugtüranordnung nach Anspruch 6, **dadurch gekennzeichnet, dass** das weitere Anbindungselement (20) einen weiteren Anbindungsbereich (21) aufweist, wobei der weitere Anbindungsbereich (21) beidseitig mit einer weiteren Einfühmut (73) des Dichtungselements (7) verbunden ist.

8. Fahrzeugtüranordnung nach Anspruch 7, **dadurch gekennzeichnet, dass** entlang des Dichtungselements (7) der weitere Anbindungsbereich (21) des weiteren Anbindungselements (20) einerseits und der Anbindungsbereich (91) oder die Anbindungsfläche (92) des Anbindungselements (9) im Wesentlichen parallel zueinander entsprechend einer Montagerichtung (11) verlaufend vorgesehen sind.

9. Fahrzeugtüranordnung nach einem der vorhergehenden Ansprüche, **dadurch gekennzeichnet, dass** das erste Verkleidungsteil (1) die Außenverkleidung und das zweite Verkleidungsteil (2, 3) die Innenverkleidung der Fahrzeugtüranordnung oder die Innenverkleidung und die Fensterrahmenabdeckung der Fahrzeugtüranordnung ist.

10. Verfahren zur Montage einer Fahrzeugtüranordnung mit einem ersten Verkleidungsteil (1), einem Strukturelement (4) und einem zweiten Verkleidungsteil (2, 3), **dadurch gekennzeichnet, dass** mittels eines Dichtungselements (7) eine Verbindung zwischen dem ersten Verkleidungsteil (1) und dem zweiten Verkleidungsteil (2,3) hergestellt wird, wobei ein längs des Dichtungselements (7) sich erstreckendes und mit dem Dichtungselement (7) zusammenwirkendes Anbindungselement (9) des ersten Verkleidungsteils (1) entweder in eine Einfühmut (71) des Dichtungselements (7) eingeführt wird oder an ein Klemmelement (72) des Dichtungselements (7) im wesentlichen umlaufendes Klemmelement (72) des Dichtungselements (7) angelegt wird.

11. Verfahren nach Anspruch 10, **dadurch gekennzeichnet, dass** das Dichtungselement (7) auf ein weiteres Anbindungselement (20) des zweiten Verkleidungsteils (2, 3) aufextrudiert wird.

## Claims

1. Vehicle door arrangement with a trim panel (1), a structural element (4) and a second trim panel (2, 3), **characterized in that** a connection between the first trim panel (1) and the second trim panel (2, 3) is provided by means of a sealing element (7), wherein the first trim panel (1) has an attachment element (9) which extends along the sealing element (7) and interacts with the sealing element (7).

2. Vehicle door arrangement according to Claim 1, **characterized in that** the sealing element (7) is provided in a substantially completely encircling manner.

3. Vehicle door arrangement according to Claim 1 or 2, **characterized in that** the sealing element (7) has an insertion groove (71), wherein an attachment region (91) of the attachment element (9) is provided engaging in the insertion groove (71).

4. Vehicle door arrangement according to Claim 1 or 2, **characterized in that** the sealing element (7) has a clamping element (72), wherein an attachment surface (92) of the attachment element (9) is provided bearing against the clamping element (72) on one side.

5. Vehicle door arrangement according to one of the preceding claims, **characterized in that** the sealing element (7) encloses a reinforcing element (14).

6. Vehicle door arrangement according to one of the preceding claims, **characterized in that** the second trim panel (2, 3) has a further attachment element (20) which extends along the sealing element (7) and interacts with the sealing element (7).

7. Vehicle door arrangement according to Claim 6, **characterized in that** the further attachment element (20) has a further attachment region (21), wherein the further attachment region (21) is connected on both sides to a further insertion groove (73) of the sealing element (7).

8. Vehicle door arrangement according to Claim 7, **characterized in that** along the sealing element (7) the further attachment region (21) of the further attachment element (20), on the one hand, and the attachment region (91) or the attachment surface (92) of the attachment element (9) are provided running substantially parallel to each other corresponding to an assembly direction (11).

9. Vehicle door arrangement according to one of the preceding claims, **characterized in that** the first trim panel (1) is the outer panel and the second trim panel (2, 3) is the inner panel of the vehicle door arrangement, or is the inner panel and the window frame covering of the vehicle door arrangement.

10. Method for the assembly of a vehicle door arrangement with a first trim panel (1), a structural element (4) and a second trim panel (2, 3), **characterized in that** a connection between the first trim panel (1) and the second trim panel (2, 3) is produced by means of a sealing element (7), wherein an attachment element (9) of the first trim panel (1), which attachment element extends along the sealing element (7) and interacts with the sealing element (7), is either inserted into an insertion groove (71) of the sealing element (7) or is placed onto a clamping element (72) of the sealing element (7).

11. Method according to Claim 10, **characterized in that** the sealing element (7) is extruded onto a further attachment element (20) of the second trim panel (2, 3).

## Revendications

1. Ensemble de portière de véhicule comprenant une partie d'habillage (1), un élément structurel (4) et une deuxième partie d'habillage (2, 3), **caractérisé en ce qu'**une connexion entre la première partie d'habillage (1) et la deuxième partie d'habillage (2, 3) est prévue au moyen d'un élément d'étanchéité (7), la première partie d'habillage (1) présentant un élément de liaison (9) s'étendant le long de l'élément d'étanchéité (7) et coopérant avec l'élément d'étanchéité (7).

2. Ensemble de portière de véhicule selon la revendication 1, **caractérisé en ce que** l'élément d'étanchéité (7) est prévu de manière à s'étendre essentiellement complètement sur la périphérie.

3. Ensemble de portière de véhicule selon la revendication 1 ou 2, **caractérisé en ce que** l'élément d'étanchéité (7) présente une rainure d'introduction (71), une région de liaison (91) de l'élément de liaison (9) étant prévue de manière à s'engager dans la rainure d'introduction (71).

4. Ensemble de portière de véhicule selon la revendication 1 ou 2, **caractérisé en ce que** l'élément d'étanchéité (7) présente un élément de serrage (72), une surface de liaison (92) de l'élément de liaison (9) étant prévue de manière à s'appliquer d'un côté contre l'élément de serrage (72).

5. Ensemble de portière de véhicule selon l'une quelconque des revendications précédentes, **caractérisé en ce que** l'élément d'étanchéité (7) renferme un élément de renforcement (14).

6. Ensemble de portière de véhicule selon l'une quelconque des revendications précédentes, **caractérisé en ce que** la deuxième partie d'habillage (2, 3) présente un élément de liaison supplémentaire (20) s'étendant le long de l'élément d'étanchéité (7) et coopérant avec l'élément d'étanchéité (7).

7. Ensemble de portière de véhicule selon la revendication 6, **caractérisé en ce que** l'élément de liaison supplémentaire (20) présente une région de liaison supplémentaire (21), la région de liaison supplémentaire (21) étant connectée des deux côtés à une rainure d'introduction supplémentaire (73) de l'élément d'étanchéité (7).

8. Ensemble de portière de véhicule selon la revendication 7, **caractérisé en ce que** le long de l'élément d'étanchéité (7), la région de liaison supplémentaire (21) de l'élément de liaison supplémentaire (20) d'une part et la région de liaison (91) ou la surface de liaison (92) de l'élément de liaison (9) sont prévues de manière à s'étendre essentiellement parallèlement l'une à l'autre suivant une direction de montage (11).

9. Ensemble de portière de véhicule selon l'une quelconque des revendications précédentes, **caractérisé en ce que** la première partie d'habillage (1) est l'habillage extérieur et la deuxième partie d'habillage (2, 3) est l'habillage intérieur de l'ensemble de portière de véhicule ou est l'habillage intérieur et le recouvrement de l'encadrement de fenêtre de l'ensemble de portière de véhicule.

10. Procédé de montage d'un ensemble de portière de véhicule comprenant une première partie d'habillage (1), un élément structurel (4) et une deuxième partie d'habillage (2, 3), **caractérisé en ce qu'**au moyen d'un élément d'étanchéité (7), une connexion est établie entre la première partie d'habillage (1) et la deuxième partie d'habillage (2, 3), un élément de liaison (9) de la première partie d'habillage (1) s'étendant le long de l'élément d'étanchéité (7) et coopérant avec l'élément d'étanchéité (7) étant introduit dans une rainure d'introduction (71) de l'élément d'étanchéité (7) ou étant appliqué contre un élément de serrage (72) de l'élément d'étanchéité (7).

11. Procédé selon la revendication 10, **caractérisé en ce que** l'élément d'étanchéité (7) est extrudé sur un élément de liaison supplémentaire (20) de la deuxième partie d'habillage (2, 3).
